# EUROPEAN PATENT APPLICATION

(11) **EP 4 311 725 A1**
(43) Date of publication of application: **31.01.2024**
(21) Application number: 23187495.9
(22) Date of filing: 25.07.2023
(51) Int. Cl.: B60R 3/02, B60P 1/43, B61D 23/02

(54) **AUTOMATED RETRACTABLE STEP FOR VEHICLES**

(30) Priority: 26.07.2022 IT 202200015747
(71) Applicant: Bode Sud S.p.A., 66041 Atessa (CH) (IT)
(72) Inventor: RUI, Carlo, 66041 ATESSA (CH) (IT)
(74) Representative: Studio Torta S.p.A.

(57) **Abstract**

A retractable step (1) for a vehicle (100) provided with an outer casing (2) is described; an extractable footboard (3) which is carried in a slidable manner by the outer casing (2) so as to slide between an extracted operating position and a retracted operating position; and an electrically operated motorised transmission (4) which is adapted to move the extractable footboard (3) between the extracted operating position and the retracted operating position; the motorised transmission (4) comprises: a connecting rod (18) connected to the retractable footboard (3), a crank (19) connected to the connecting rod (18), and actuator means (20) for driving the crank (19) in rotation; the crank (19) is provided with a rectilinear cam (19c) that extends along the intermediate portion of the crank (18); the actuator means comprise a cam-following pin (22) that cooperates in a sliding manner with the rectilinear cam (19c), and a motorised mechanism (24) which is configured to drive the cam-following pin (22) along a circular trajectory so as to drive the crank (19) in rotation.

## Description

### CROSS-REFERENCE TO RELATED APPLICATIONS

This patent application claims priority from Italian patent application no. 102022000015747 filed on July 26, 2022, the entire disclosure of which is incorporated herein by reference.

### TECHNICAL FIELD

The present invention is related to an automated retractable step for a motorcaravan and/or similar vehicles, and more specifically an electrically actuated retractable step. The following description will refer explicitly to said use without loss of generality.

### STATE OF THE ART

As known, motorcaravans, vans and/or similar vehicles are normally provided with a retractable step arranged at an entrance door to facilitate access on board by means of an extractable footboard.

In some cases, the step includes a motorised transmission to move the footboard between a retracted position, in which the footboard is housed in a compartment below the floor of the motorcaravan, and an extracted position, in which the footboard extends cantilevered outside the profile of the motorcaravan and offers support for access on board.

An example of a retractable step of the above-mentioned type is described in EP3002156 A2. Although this latter retractable step meets some requirements in terms of simplification of the movement of the footboard, easy release of the transmission in the event of failure, and greater transmission efficiency, there is still room for improvement.

In particular, the need is felt to provide an alternative transmission, which is preferably less bulky, less expensive, and/or less subject to stress.

The need is also felt to further simplify release of the transmission in the event of failure.

In addition, the need is felt to protect the transmission from wear and from potential failures due to the presence of dirt or debris.

An object of the invention is to meet at least one of the above needs, preferably in a simple and inexpensive manner.

### SUMMARY OF THE INVENTION

The object is achieved by a retractable step according to claim 1 and a vehicle according to claim 10. The dependent claims illustrate particular embodiments of the invention.

### BRIEF DESCRIPTION OF THE DRAWINGS

The invention will now be described with reference to the attached drawings that illustrate a non-limiting embodiment example thereof, in which:
- Figure 1 is a perspective view of a vehicle provided with a retractable step according to the invention, with parts removed for clarity;
- Figures 2 and 3 are two perspective views of a retractable step according to the invention, in a first and in a second operating position, with parts in section and parts removed for clarity;
- Figure 4 is a partial exploded perspective view of the retractable step illustrated in Figures 2 and 3, with parts removed for clarity;
- Figure 5 is a perspective view of the retractable step illustrated in Figures 2 and 3, with parts in section and parts removed for clarity;
- Figure 6 is a perspective exploded view of the motorised transmission of the retractable step illustrated in Figures 2 and 3, with parts removed for clarity;
- Figure 7 is a perspective view from below of the crank that drives the motorised transmission illustrated in Figure 6;
- Figures 8 and 9 are two section views of a part of the extractable footboard of the retractable step illustrated in Figures 2 and 3, with parts removed for clarity;
- Figure 10 is a perspective view from below of the retractable step illustrated in Figures 2 and 3, with parts removed for clarity; and
- Figures 11 and 12 are two section views of a portion of the retractable step, in section along the mid-plane of the crank that drives the retractable step illustrated in Figures 2 and 3, in two different operating positions and with parts removed for clarity.

### DETAILED DISCLOSURE OF THE INVENTION

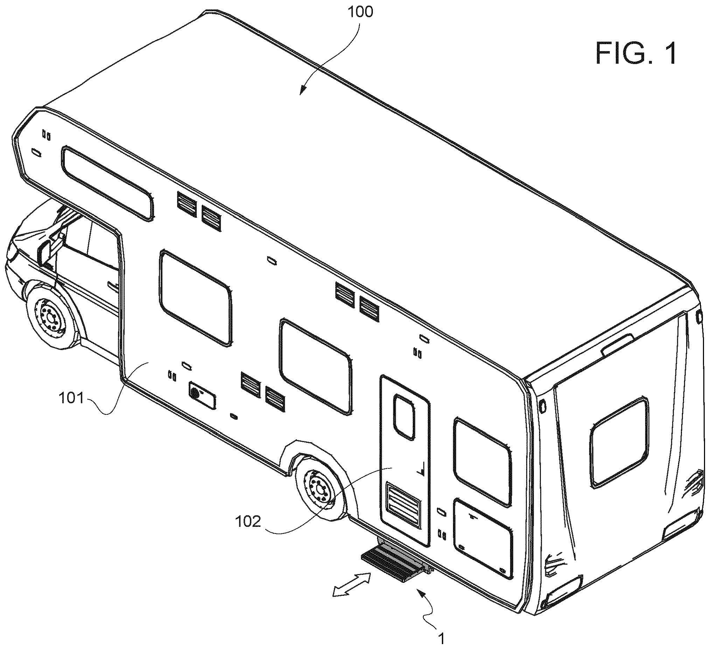

With reference to Figures 1, 2 and 3, the number 1 indicates as a whole an automated retractable step which is particularly suitable for installation on a vehicle 100 such as, for example, a motorcaravan, a van, a lorry and/or similar vehicles for overcoming a height difference and facilitating access on board the vehicle.

More in detail, the retractable step 1 is preferably intended to be securely anchored to the chassis of the vehicle 100, below an access door 102 to the passenger compartment or interior cabin 101 of the vehicle 100.

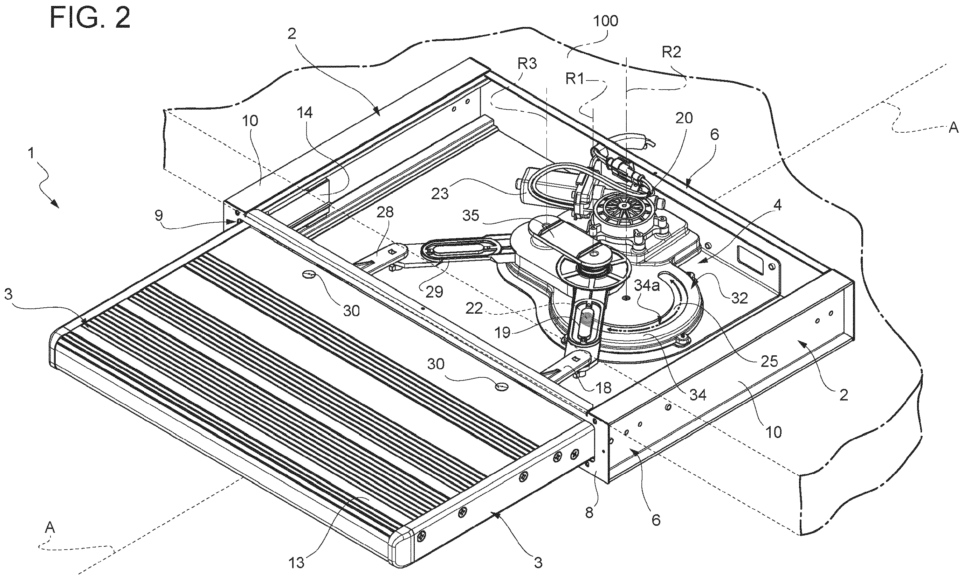

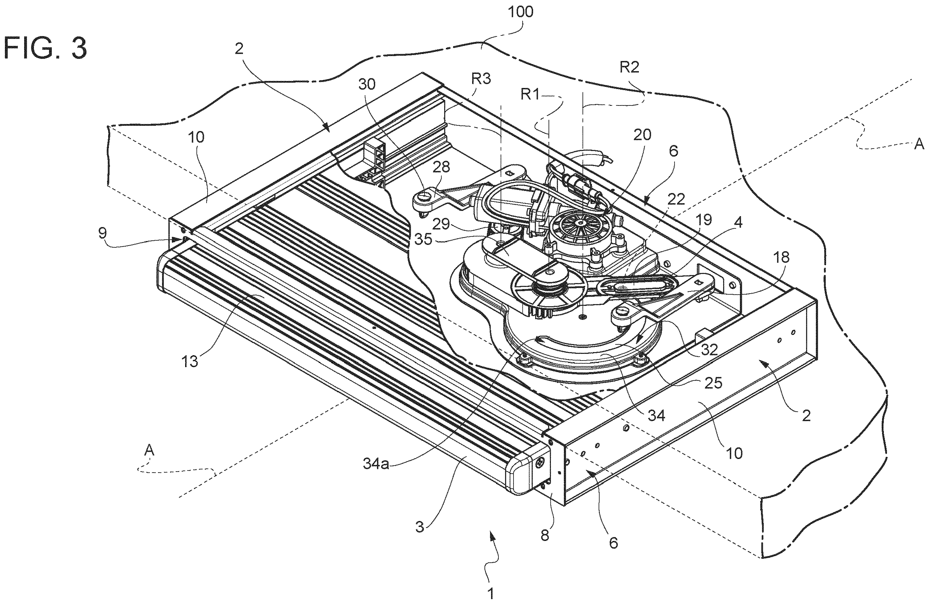

With reference to the example illustrated in Figures 2 and 3, the retractable step 1 firstly comprises: an outer casing 2, that extends along a reference axis A, is hollow inside, and is adapted to be carried by the chassis of the vehicle 100 in a per se known manner; an extractable footboard 3, which is carried in a slidable manner by the outer casing 2 so that it can slide along the reference axis A between an extracted position (Figures 1 and 2) and a retracted position (Figure 3); and an electrically operated motorised transmission 4, which is preferably housed inside the outer casing 2 and is adapted to move, on command, the extractable footboard 3 between the extracted position and the retracted position.

With reference to Figures 1 and 2, in the extracted position the extractable footboard 3 extends cantilevered from the outer casing 2 along the reference axis A, and protrudes cantilevered beyond the outer profile of the vehicle 100, so that it can be stepped on by a user during access on board the vehicle 100.

With reference to Figure 3, in the retracted position, the extractable footboard 3 is preferably housed substantially entirely within the outer casing 2 and does not protrude from the outer profile of the vehicle 100.

In the example illustrated, in particular, the outer casing 2 delimits on the inside a compartment for housing the extractable footboard 3, which has dimensions that approximate by excess those of the extractable footboard 3, so that the latter can be slidingly inserted inside the compartment of the outer casing 2 with minimum clearance in the lateral direction, i.e. orthogonally to the reference axis A.

With reference to Figures 2 and 3, in the example illustrated, the outer casing 2 preferably comprises a box-like body/shell 6 substantially parallelepipedal in shape, which is preferably made of aluminium or other similar metal material and is sized so as to house the extractable footboard 3 at least partially on the inside.

More in detail, the outer casing 2 preferably comprises a front closing cover 8, which is provided with an opening 9 having shape complementary to the shape of the extractable footboard 3, which allows said extractable footboard 3 to slide between the extracted position and the retracted position inside the outer casing 2.

In addition, with reference to Figures 2 to 5, the outer casing 2 comprises in particular also two opposite lateral sides 10, that extend preferably in a manner substantially parallel to the reference axis A, on opposite sides of the latter, and are adapted to be anchored to the chassis of the vehicle 100 in a per se known manner.

With reference to Figures 2-4, the extractable footboard 3 preferably comprises: a plate-like walkable body 13, which in particular is substantially parallelepipedal in shape and is preferably made of aluminium or other similar metal material; and a pair of protruding bars 14 which are carried on opposite sides of the plate-like walkable body 13, extend parallel to the reference axis A and are adapted to remain inserted in the outer casing 2 when the extractable footboard 3 is in the extracted position, to support the weight of the plate-like walkable body 13 and of the user.

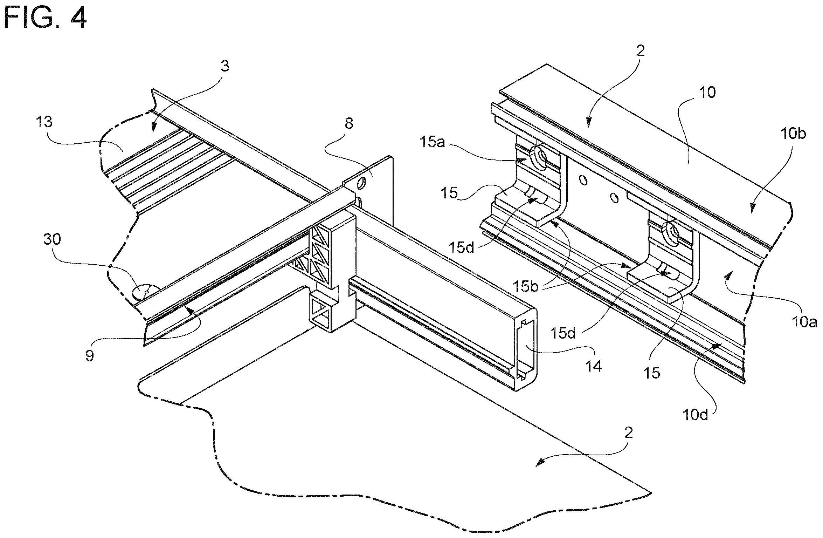

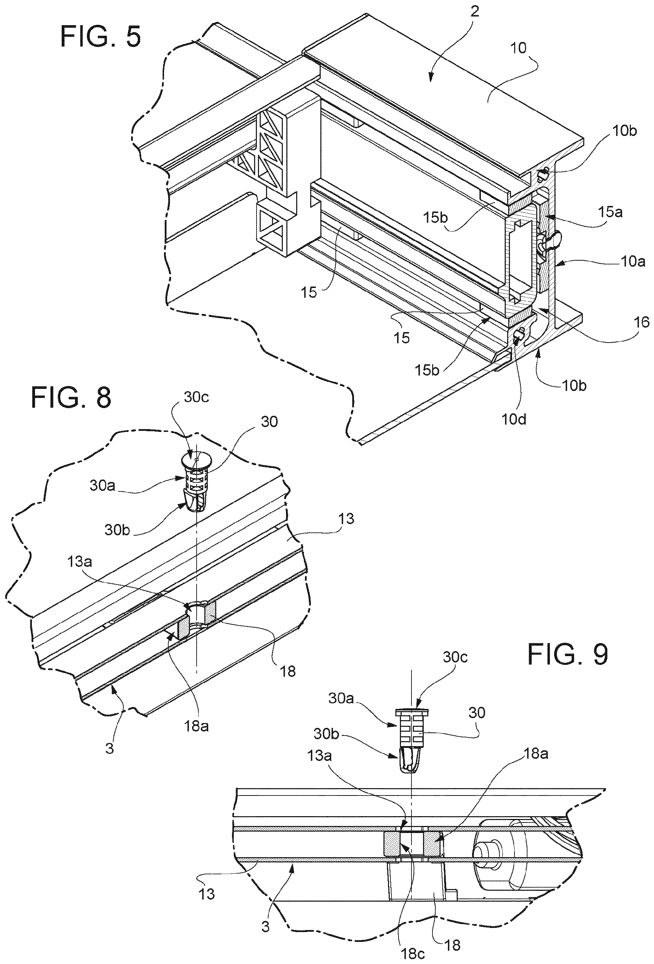

In addition, with reference to Figures 4 and 5, the retractable step 1 is preferably also provided with at least one pair of guideways 15, each of which is securely fixed to a lateral side 10 of the outer casing 2, inside the outer casing 2, and is operatively interposed between the outer casing 2 and the extractable footboard 3 to allow the latter to slide between the extracted position and the retracted position.

More in detail, the guideways 15 are arranged on opposite sides of the extractable footboard 3, preferably in a specular position to each other. In the example illustrated, the retractable step 1 is preferably provided with four guideways 15, arranged in pairs on opposite sides of the extractable footboard 3.

Preferably, each guideway 15 can be made of plastic material.

Furthermore, the guideway 15 has complementary in shape to the shape of a corresponding lateral side 10 of the outer casing 2.

In addition, with reference to Figure 5, the two lateral sides 10 of the outer casing 2 are shaped so as to delimit, for example together with the extractable footboard 3 and/or the guideways 15, one or more longitudinal seats or pockets 16 for collecting any sand, stones and/or other debris that could be deposited on the extractable footboard during use of the retractable step 1, so as to avoid this debris accumulating between the extractable footboard 3 and the guideways 15, obstructing or impeding the movement of the extractable footboard 3.

With reference to the example illustrated in Figures 4 and 5, in particular, each lateral side 10 preferably comprises a rectilinear profile which is I-shaped, C-shaped or similar and is advantageously made of aluminium.

More in detail, each lateral side 10 preferably comprises a substantially vertical central rectilinear portion 10a, and two lateral rectilinear portions 10b carried on opposite sides of the central rectilinear portion 10a, and extending crosswise to the latter, in particular in a substantially horizontal manner.

With reference to Figure 5, furthermore, each lateral side 10 preferably also comprises a protruding longitudinal ribbing 10d that extends cantilevered upwards from the free end of the lower lateral rectilinear portion 10b, remaining spaced at the side of the central rectilinear portion 10a.

Preferably, the protruding longitudinal ribbing 10d extends without interruptions substantially throughout the entire length of the lateral side 10.

Preferably, the gap between the central rectilinear portion 10a and the protruding longitudinal ribbing 10d delimits/defines the corresponding longitudinal pocket 16.

With reference to Figures 4 and 5, in the example illustrated, furthermore, the guideways 15 are preferably substantially C-shaped.

More in detail, each guideway 15 preferably comprises a central rectilinear portion 15a which in use extends substantially vertical, and two lateral rectilinear portions 15b carried on opposite sides of the central rectilinear portion 15a and extending substantially orthogonal to the latter.

Preferably, the central rectilinear portion 15a is adapted to be arranged abutting on the central rectilinear portion 10a of the lateral side 10.

More in detail, each guideway 15 is preferably adapted to be securely fixed to the lateral side 10 by means of a rivet and/or other similar fixing member arranged on the central rectilinear portion 15a of the guideway 15.

In addition, the upper lateral rectilinear portion 15b of the guideway 15 is preferably designed to be arranged in abutment on the upper lateral rectilinear portion 10b of a corresponding lateral side 10.

The lower lateral rectilinear portion 15b of the guideway 15, on the other hand, is preferably designed to be arranged in abutment on the protruding longitudinal ribbing 10d of the corresponding lateral side.

With reference to the example illustrated in Figures 4 and 5, furthermore, the rectilinear guides 15 are preferably provided with a through opening 15d which in use is adapted to establish communication between the inner compartment of the outer casing 2 and the longitudinal pockets 16, so that any debris that may have accumulated between the extractable footboard 3 and the guideways 15 can flow freely into the longitudinal pockets 16.

With reference to the example described, furthermore, the retractable step 1 is preferably provided with an oblong dust brush (not visible), which is arranged on the front closing cover 8, close to the upper edge of the opening 9, and is adapted to brush against the upper surface of the extractable footboard 3 during sliding of the latter, so as to prevent any residues on the upper surface of the extractable footboard 3 from penetrating the outer casing 2, jamming the motorised transmission 4.

Regarding the motorised transmission 4 of the extractable footboard 3, with reference to Figures 2, 3, 6 and 7, it firstly comprises: a connecting rod 18 provided with a first end 18a connected to the extractable footboard 3 and a second end 18b opposite the first one; a driving crank 19 provided with a first end 19a connected in a rotatable free manner to the second end 18b of the connecting rod 18, and a second end 19b, opposite the first one, carried in a rotatable free manner by the outer casing 2 so that it can rotate/oscillate around a rotation axis R₁ substantially orthogonal to the reference axis A; and electrically operated actuator means 20 configured to drive the crank 19 in rotation around the rotation axis R₁.

In addition, the crank 19 is provided with a rectilinear guide or cam 19c which extends on the intermediate portion of the crank 19 between the first end 19a and the second end 19b, preferably straddling the vertical mid-plane of the crank 19.

Preferably, the rectilinear cam 19c extends in a radial direction with respect to the rotation axis R₁.

The actuator means 20 preferably comprise: a cam-following pin 22, which is carried in a movable manner with respect to the outer casing 2 and is adapted to slidingly cooperate with the rectilinear cam 19c in a radial direction with respect to the rotation axis R₁; and an electrically actuated motorised mechanism 24, which is configured to drive the cam-following pin 22 along a circular trajectory around a rotation axis R₂ distinct and parallel to the rotation axis R₁, so as to drive the crank 19 in rotation around the rotation axis R₁.

More in detail, the motorised mechanism 24 preferably comprises: a gear 25, which is carried in a rotatable free manner by the outer casing 2, so that it can rotate around the rotation axis R₂ and in turn carries the cam-following pin 22, in an eccentric position with respect to the rotation axis R₂; and an electric motor which is preferably housed in the outer casing 2 and is mechanically connected to the gear 25 to drive it in rotation around the rotation axis R₂.

With reference to the example illustrated in Figures 2, 3 and 6, in particular, the cam-following pin 22 extends cantilevered from the upper surface of the gear 25 in an axial direction with respect to the rotation axis R₂.

Preferably, the cam-following pin 22 is adapted to engage in a slidable manner the rectilinear cam 19c, so that it can slide forward and back along the rectilinear cam 19c in a radial direction with respect to the rotation axis R₂ and drive the crank 19 in rotation.

With reference to the example illustrated in Figures 2, 3, 6 and 7, the motorised transmission 4 preferably also comprises a second connecting rod 28 provided with a first end 28a connected to the extractable footboard 3, and a second end 28b opposite the first one; and a second driven crank 29 provided with a first end 29a which is connected in a rotatable free manner to the second end 28b of the connecting rod 28, and a second end 29b opposite the first one, which is carried in a rotatable free manner by the outer casing 2 so that it can rotate/oscillate around a rotation axis R₃ substantially parallel to the rotation axis R₁.

Preferably, the connecting rod 18 and the connecting rod 28 are arranged in a position specular to each other on opposite sides of the vertical mid-plane of the outer casing 2.

Analogously, the crank 19 and the crank 29 are preferably arranged in a position specular to each other on opposite sides of the vertical mid-plane of the outer casing 2.

In other words, the connecting rod 18 and the connecting rod 28 are connected to the extractable footboard 3 in a position specular to each other on opposite sides of the vertical mid-plane of the extractable footboard 3, while the crank 19 and the crank 29 are preferably pivotally connected on the outer casing 2 in a position specular to each other on opposite sides of the vertical mid-plane of the outer casing 2.

Preferably the connecting rod 18 and the crank 19, and/or the connecting rod 28 and the crank 29 are made of plastic material. In addition, the connecting rod 18 and/or the connecting rod 28 are preferably connected to the extractable footboard 3 in a rotatable free manner.

With reference to the example illustrated in Figures 8 and 9, in particular, the extractable footboard is preferably provided with two through holes 13a that extend orthogonal to the reference axis A, i.e. in a vertical direction.

In other words, the through holes 13a are preferably substantially parallel to the rotation axis R₁.

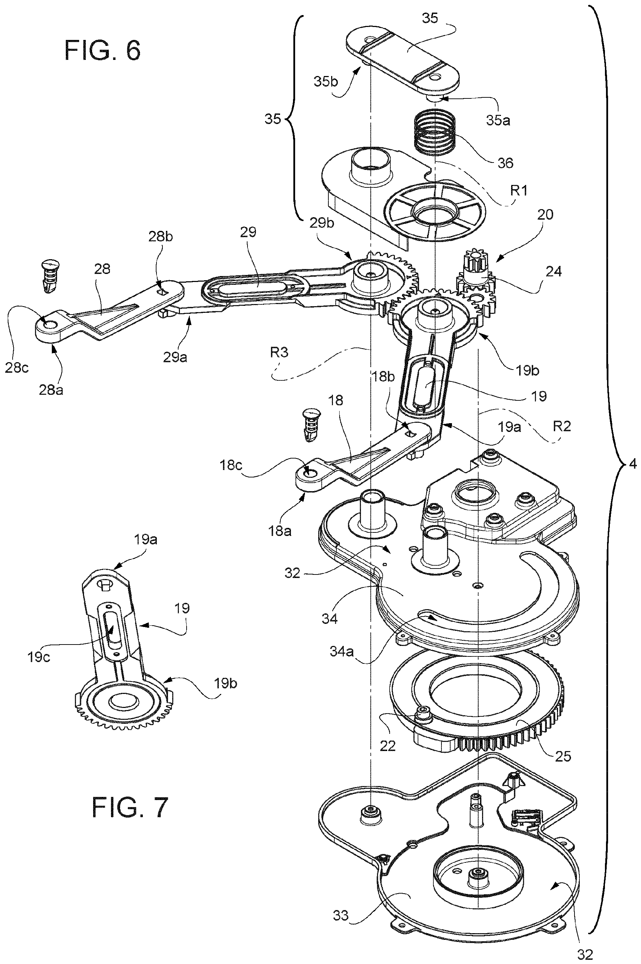

With reference to the example illustrated in Figures 6, 8 and 9, furthermore, the end 18a of the connecting rod 18 and/or the end 28a of the connecting rod 28 are preferably provided with a through hole 18c and/or 28c extending orthogonal to the reference axis A, i.e. in a vertical direction.

In other words, also the through holes 18c, 28c are preferably substantially parallel to the rotation axis R₁.

The ends 18a and 28a of the connecting rods 18 and 28 are adapted to be inserted inside the extractable footboard 3 so as to arrange the through holes 18c and 28c locally coaxial with the corresponding holes 13a of the extractable footboard 3.

In addition, the retractable step 1 is preferably provided with snap pins 30 which are adapted to be inserted in the through holes 13a of the extractable footboard 3 and in the through holes 18c and 28c of the connecting rods 18 and 28 to stably couple the extractable footboard 3 with the connecting rods 18 and 28, and are preferably made of plastic material.

With reference to the example illustrated in Figures 8 and 9, each snap pin 30 preferably comprises a cylindrical body 30a which is adapted to engage the through holes 13a, 18c and/or 28c, and an elastically deformable hook 30b that extends from the lower end of the cylindrical body 30a, and is adapted to engage the through holes 13a, 18c and/or 28c and then to couple the connecting rods 18 and 28 to the extractable footboard 3.

In addition, the snap pin 30 is provided with an end portion 30c opposite the hook 30b which is adapted to engage a seat having complementary shape (not visible) obtained on the extractable footboard 3 so as to block rotation of the snap pin 30 inside the holes 13a of the extractable footboard 3.

For example, the end portion 30c can comprise one or more appendages or fins radially protruding with respect to the longitudinal axis in the snap pin 30.

In addition, with reference to the example illustrated in Figure 6, the second end 19b of the crank 19 preferably has a substantially circular profile and is provided with an external toothing coaxial with the rotation axis R₁. Analogously, the second end 29b of the crank 29 preferably has a substantially circular profile and is provided with an external toothing coaxial with the rotation axis R₃.

Preferably, the toothing of the second end 19b of the crank 19 is adapted to engage with the toothing of the second end 29b of the crank 29, so that the crank 19 drives the crank 29 in rotation around the rotation axis R₃ when it rotates/oscillates around the rotation axis R₁.

In addition, the toothing of the second end 19b of the crank 19 preferably has a complementary shape and the same number of teeth as the toothing of the second end 29b of the crank 29, namely it is configured so that the two cranks 19 and 29 rotate around the respective rotation axes R₂ and R₃ in a manner specular to each other.

With reference to the example illustrated in Figures 2, 3, 6 and 10, in addition, the outer casing 2 is preferably provided with a protective shell 32 configured to house and protect at least the gear 25 and/or the ends 19b and 29b of the cranks 19 and 29. The shell 32 preferably comprises a lower half-shell 33 and an upper half-shell 34 having complementary shape coupled stably to each other.

The gear 25 and/or the end 29b of the crank 29 are preferably carried in a rotatable free manner by corresponding protruding pins obtained on the lower half-shell 33 and respectively coaxial to the rotation axis R₂ and to the rotation axis R₃.

In addition, the upper half-shell 34 is preferably shaped to cover and protect the gear 25, and preferably comprises a circular slit 34a coaxial with the rotation axis R₂ which is adapted to be engaged by the cam-following pin 22.

With reference to Figures 2, 3 and 6, furthermore, the shell 32 preferably comprises an upper cover 35 which is preferably carried by the upper half-shell 34 and is adapted to be arranged above the ends 19b and 29b of the cranks 19 and 29.

The upper cover 35 is preferably shaped so as to retain the end 29b of the crank 29 in abutment on the lower half-shell 33, and at the same time to allow the end 19b of the crank 19 to translate along the rotation axis R₁.

More in detail, the upper cover 35 preferably comprises two protruding pins 35a and 35b that extend respectively along the rotation axes R₁ and R₃ and are adapted to engage complementary-shaped openings obtained on the respective ends 19b and 29b of the cranks 19 and 29.

Preferably, the end 19b of the crank 19 can slide with respect to the pin 35a along the rotation axis R₁.

In other words, the crank 19 is carried by the outer casing 2 in a movable manner, and is able to translate in the outer casing 2 along the rotation axis R₁.

Preferably, the retractable step 1 also comprises elastic means 36 which are operatively interposed between the end 19b of the crank 19 and the cover 35 and are adapted to exert forces to retain the end 19b of the crank 19 in abutment on the lower half-shell 33.

The elastic means 36, on the other hand, preferably comprise a helical spring coaxial with the rotation axis R₁.

In addition, the retractable step 1 is preferably provided with a manually operated release system which is configured to allow decoupling/releasing of the extractable footboard 3 from the motorised transmission 4, so that the extractable footboard 3 can be moved between the extracted position and the retracted position also when the motorised transmission 4 is blocked.

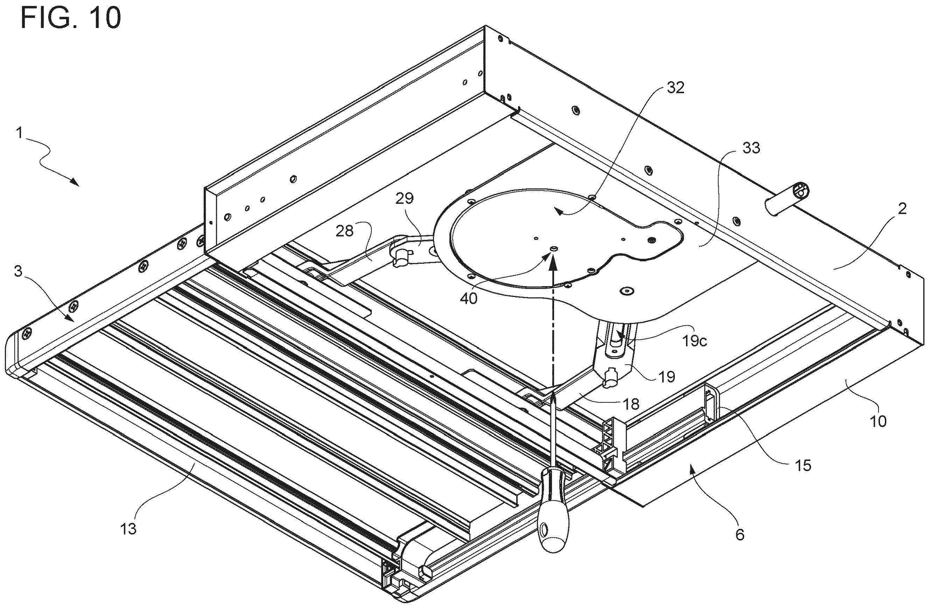

More in detail, with reference to Figures 10, 11 and 12, the outer casing 2 preferably comprises a through opening 40 which is obtained on its lower surface, close to the end 19b of the crank 19, and extends preferably substantially parallel to the rotation axis R₂. The through opening 40 allows a user to reach the crank 19 for example by means of a tool such as a screwdriver and/or the like, so as to exert a force against the lower surface of the end 19b of the crank 19 to move the latter towards the cover 35, namely upwards along the rotation axis R₁.

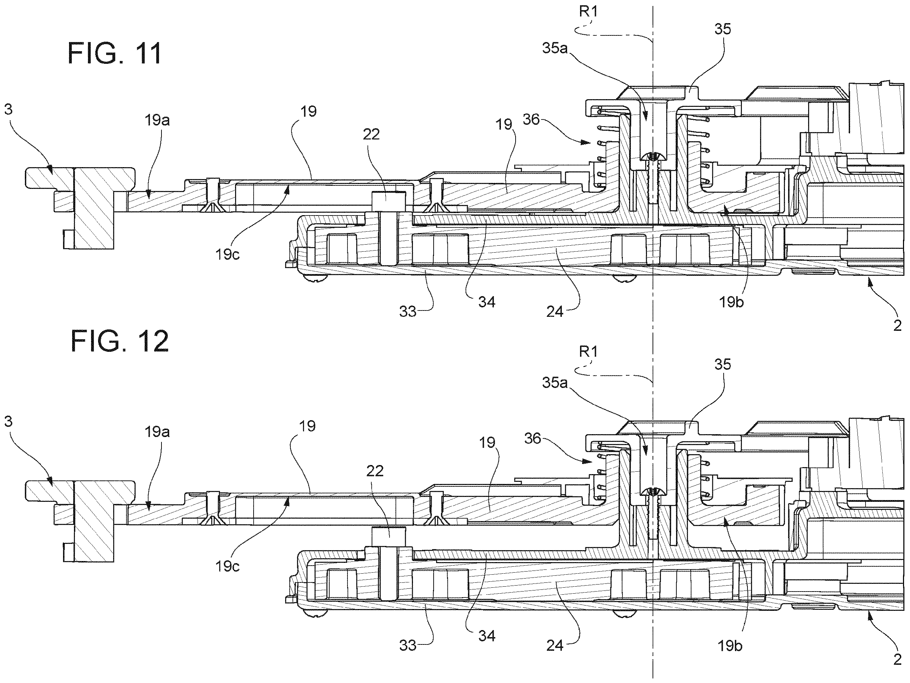

As can be seen in the schematic example illustrated in Figures 11 and 12, the upward movement of the end 19b of the crank 19 determines lifting of the rectilinear cam 19c and consequent disengagement of the cam-following pin 22 from the latter.

When at rest (Figure 11), in fact, the elastic means 36 retain the end 19b of the crank 19 in abutment against the lower half-shell 33 and the cam-following pin 22 engaged inside the rectilinear cam 19c. When released (Figure 12), on the other hand, the force exerted by a user on the crank 19 lifts the end 19a of the crank 19 and disengages the cam-following pin 22 from the rectilinear cam 19c, releasing the crank 19 and the extractable footboard 3 from the actuator means 20.

Clearly, when subjected to the force exerted by the user on the end 19b, the crank 19 and the connecting rod 18 bend, so as to compress the elastic means 36 and bring the end 19c very close to the cover 35.

In addition, the cover 35 is preferably sized so that the maximum range of the end 19b of the crank 19 is such as to maintain the toothing of the crank 19 always engaged with the toothing of the crank 29, also when the end 19b is completely raised in the release position. Consequently, the cranks 19 and 29 are able to maintain the synchronism also when the end 19a of the crank 19 is raised in the release position.

The operation of the embodiment of the retractable step 1 described can be easily deduced from the above and will be illustrated briefly below.

The operation of the electric motor causes rotation of the gear 25 and the cam-following pin 22. During rotation of the gear 25, the cam-following pin 22 slides in the rectilinear cam 19c and determines the oscillating movement of the drive crank 19 around the rotation axis R₁. The oscillating movement of the drive crank 19, in turn, determines the specular oscillating movement of the driven crank 29 around the rotation axis R₃.

Lastly, the movement of the two cranks 19 and 29 determines the movement of the respective connecting rods 18 and 28 along the reference axis A and the extraction or retraction of the extractable footboard 3 from or into the outer casing 2.

In detail, since the cranks 19 and 29 and the connecting rods 18 and 28 are carried in a position specular to each other with respect to the vertical mid-plane of the retractable step 1, the result of the forces exerted on the extractable footboard 3 in a direction orthogonal to the reference axis A is null, and consequently in use the connecting rods 18 and 28 and the extractable footboard 3 move substantially only by a reciprocating rectilinear motion along the reference axis A.

From the above, the advantages of the retractable step 1 according to the invention are evident.

Firstly, the motorised transmission 4 is simple and inexpensive to produce, since it is formed of a reduced number of components.

In particular, the cranks and connecting rods are identical to one another and can be produced with the same die, with obvious consequent advantages.

In addition, the motorised transmission 4 has a high efficiency in transmission of the forces to extract or retract the extractable footboard 3, since the connecting rods 18 and 28 are always arranged parallel to the reference axis A. Consequently, all the force transmitted by the connecting rods 18 and 28 to the extractable footboard 3 is always aligned with the direction of movement of the extractable footboard 3, along the reference axis A.

In addition, the particular conformation of the shell 32 covers and protects from debris the entire motorised transmission 4, thus preventing jamming and minimizing wear of the various gears.

In detail, use of the cover 35 covers and effectively protects the ends 19b and 29b of the cranks 19 and 29 from debris.

Lastly, the release system requires minimum force to raise the crank 19, since when the motorised means 24 are at a standstill, the crank 19 is not engaged on the crank 29 or on the cam-following pin 22 due to the clearance in the motorised transmission 4, and therefore there are no friction forces countering lifting of the end 19b of the crank 19. In addition, since it is made of elastic flexible plastic material, the crank 19 can be easily bent upwards, considerably facilitating release of the extractable footboard 3 in the event of failure of the motorised transmission 4.

Lastly it is clear that modifications and variations that do not depart from the protective scope defined by the claims can be made to the retractable step 1 according to the present invention.

## Claims

1. A retractable step (1) for a vehicle (100), said retractable step (1) comprising:
- an outer casing (2), which extends along a reference axis (A) ;
- an extractable footboard (3), which is carried in a slidable manner by said outer casing (2) so as to slide along said reference axis (A) between an extracted position, wherein said extractable footboard (3) extends cantilevered outside said outer casing (2), and a retracted position, wherein said extractable footboard (3) is at least partially housed inside said outer casing (2); and
- an electrically operated motorised transmission (4), which is adapted to move, on command, said extractable footboard (3) between said extracted position and said retracted position; said motorised transmission (4) comprising:
- a first connecting rod (18) comprising a first connecting rod end (18a) connected to said extractable footboard (3) and a second connecting rod end (18b) opposite to said first connecting rod end (18a);
- a first crank (19) comprising a first crank end (19a) connected in rotatable free manner to said second connecting rod end (18b), and a second crank end (19b), opposite to said first crank end (19a), carried in a rotatable free manner by said outer casing (2), so that it can rotate/oscillate about a first rotation axis (R₁) orthogonal to said reference axis (A);
- actuating means (20) configured to drive said first crank (19) into rotation about said first rotation axis (R₁);
said retractable step (1) being **characterized in that** said first crank (19) is provided with a rectilinear cam (19c) which extends along an intermediate portion of said first crank (19) comprised between said first crank end (19a) and said second crank end (19b); and **in that** said actuating means (20) comprise:
- a cam-following pin (22) which is carried in a movable manner with respect to said outer casing (2) and is adapted to cooperate in a slidable manner with said rectilinear cam (19c) in a radial direction with respect to said first rotation axis (R₁); and
- a motorised mechanism (24) which is configured for driving said cam-following pin (22) along a circular trajectory about a second rotation axis (R₂) distinct and parallel to said first rotation axis (R₁), so as to drive into rotation said first crank (19) about said first rotation axis (R₁).

2. The retractable step according to claim 1, wherein said motorised mechanism (24) comprises a gear (25), which is carried in a rotatable free manner by said outer casing (2) so that it can rotate about said second rotation axis (R₂), and carries said cam-following pin (22) in an eccentric position with respect to said second rotation axis (R₂).

3. The retractable step according to claim 2, wherein said motorised mechanism (24) comprises an electric motor which is mechanically connected to said gear (25) for driving it into rotation about said second rotation axis (R₂).

4. The retractable step according to claim 2 or 3, wherein said cam-following pin (22) extends cantilevered from said gear (25) parallel to said second rotation axis (R₂).

5. The retractable step according to any of the preceding claims, wherein said motorised transmission (4) comprises: a second connecting rod (28) comprising a third connecting rod end (28a) connected to said extractable footboard (3) and a fourth connecting rod end (28b) opposite to said third connecting rod end (28a); and a second crank (29) comprising a third crank end (29a) connected in a rotatable free manner to said fourth connecting rod end (28b), and a fourth crank end (29b), opposite to said third crank end (29a), carried in a rotatable free manner by said outer casing (2) so that it can rotate/oscillate about a third rotation axis (R₃) parallel to said first rotation axis (R₁).

6. The retractable step according to claim 5, wherein said first connecting rod (18) and said second connecting rod (28), and/or said first crank (19) and said second crank (29), are arranged in a specular position to each other on opposite sides of the vertical mid-plane of said outer casing (2).

7. The retractable step according to claim 5 or 6, wherein said second crank end (19b) and said fourth crank end (29b) have a circular profile and are each provided with an external toothing coaxial respectively to said first rotation axis (R₁) and to said third rotation axis (R₃);
the toothing of said second crank end (19b) being adapted to engage with the toothing of said fourth crank end (29b), so that said first crank (19) drives into rotation said second crank (29) about said third rotation axis (R₃).

8. The retractable step according to any of the preceding claims, wherein said outer casing (2) comprises a protective shell (32) which houses and protects at least said second crank end (19b) of said first crank (19);
said protective shell (32) being shaped so as to allow said second crank end (19b) to slide upwards along said first rotation axis (R₁), so as to disengage said cam-following pin (22) from said rectilinear cam (19c).

9. The retractable step according to any of the preceding claims, wherein said outer casing (2) comprises a through opening (40) which is made on the lower surface of said outer casing (2), close to said second crank end (19b), and allows a user to reach said first crank (19) to be able to exert a force against said second crank end (19b) adapted to move said second crank end (19b) upwards along said first rotation axis (R₁) and disengage said cam-following pin (22) from said rectilinear cam (19c) .

10. A vehicle (100) comprising a chassis movable with respect to the ground by means of a plurality of wheels, a passenger compartment and/or an interior cabin (101) carried by said chassis, a door (102) for the access to said passenger compartment or interior cabin (101), and a retractable step (1) which is carried by said chassis, below said door (102), and is realized according to any of the preceding claims.
